# EUROPÄISCHE PATENTSCHRIFT

(11) **EP 3 415 238 B1**
(45) Veröffentlichungstag und Bekanntmachung des Hinweises auf die Patenterteilung: **27.05.2020**
(21) Anmeldenummer: 17176001.0
(22) Anmeldetag: 14.06.2017
(51) Int. Cl.: B02C 15/00, F16H 3/54

(54) **VERTIKALMÜHLENGETRIEBE**
VERTICAL MILL GEAR
ENTRAÎNEMENT DE BROYEUR VERTICAL

(43) Veröffentlichungstag der Anmeldung: 19.12.2018
(73) Patentinhaber: Flender GmbH, 46395 Bocholt (DE)
(72) Erfinder: Becka, Simon, 45128 Essen (DE); Brun, Steffen, 46325 Borken (DE); Friedrich, Matthias, 46395 Bocholt (DE); Josten, Guido, 46395 Bocholt (DE); Prusak, Robert, 45891 Gelsenkirchen (DE); Schlegel, Eugen, 46117 Oberhausen (DE); Schmeink, Franz, 46395 Bocholt (DE); Schroer, Dirk, 46414 Rhede (DE); Tegelkamp, Michael, 46399 Bocholt (DE)
(74) Vertreter: Maier, Daniel Oliver

(56) Entgegenhaltungen:
- WO-A1-2016/198146
- CH-A5- 694 244
- DE-A1- 2 707 699
- GB-A- 2 001 553

## Beschreibung

Die Erfindung betrifft ein Vertikalmühlengetriebe mit einem Gehäuse, einer in dem Gehäuse um eine im Wesentlichen horizontale erste Drehachse drehbar gelagerte Antriebswelle, die an einem ihrer Enden mit einem Kegelritzel versehen ist, einer in dem Gehäuse drehbar um eine im Wesentlichen vertikale zweite Drehachse gelagerte Zwischenwelle, die im unteren Bereich mit einem mit dem Kegelritzel im Eingriff stehenden Kegelrad versehen ist, einem über die Zwischenwelle drehend angetriebenen Sonnenrad einer ersten Planetenstufe und einem in dem Gehäuse drehbar um die zweite Drehachse gelagerten Planetenradträger, an dem drehbar um eine zugeordnete Planetenraddrehachse zumindest ein Planetenrad gehalten ist, das einerseits mit dem Sonnenrad und andererseits mit einer Innenverzahnung eines ortsfest an dem Gehäuse gehaltenen Hohlrads im Eingriff ist. Diese erste Planetenstufe in dem Vertikalmühlengetriebe kann vorteilhafterweise eine zweite abtreibseitige Planetenstufe, die ebenfalls um die vertikale zweite Drehachse rotiert und wiederum aus einer von der Vorstufe angetriebenen Sonnenrad, einem einstellbeweglichen zweiten Planetenträger und einem gehäusefesten zweiten Hohlrad aufgebaut ist, antreiben.

Vertikalmühlengetriebe der eingangs genannten Art sind im Stand der Technik in unterschiedlichen Ausgestaltungen. Sie dienen nicht nur der Wandlung von Drehmomenten und Drehzahlen in Größe und Richtung, sondern auch der Aufnahme und Abstützung von Prozesslasten. Der Mahlprozess führt dabei zu Schwingungen, die Eigenfrequenzen des Triebstranges anregen, der durch einen Motor, eine Kupplung, die von diesen angetriebene Antriebswelle, das Kegelritzel, das Kegelrad, die Zwischenwelle, das an dieser gehaltene Sonnenrad, das zumindest eine Planetenrad, den Planetenradträger und das Hohlrad einer ersten Planetenstufe und einer vorteilhafterweise nachfolgenden zusätzlichen gleichartigen zweiten Planetenstufe oder weitere Planetenstufen gebildet wird. Derartige Eigenfrequenzen können den Antriebsstrang zumindest in Teilen oder vollständig zerstören. Üblicherweise ist das schwächste Element des Triebstranges am anfälligsten für Schäden. In Vertikalmühlengetrieben ist dies meist die durch das Kegelritzel und das Kegelrad gebildete Kegelradstufe. Ebenso ist bekannt, dass mit zusätzlichen einfach- oder doppelgelenkigen Kupplungen im Triebstrang zwischen Zwischenwelle und dem ersten Sonnenrad versucht wird, die einzelnen Stufen voneinander zu entkoppeln.

Die Kegelradstufe dient dem Zweck der Wandlung des Drehmoments und der Drehzahl in Größe und Richtung. Das Drehmoment wird von dem Kegelritzel auf das Kegelrad übertragen. Dieses überträgt das Drehmoment auf die vertikal stehende Zwischenwelle. Hierbei führen die resultierenden Kräfte in der Verzahnung zu einer Verformung der Zwischenwelle, welche das Tragverhalten der Planetenvorstufe beeinflusst. Planetenstufen erfordern zum statisch bestimmten Aufbau zumindest ein frei einstellbares Glied, dass in dieser Form der Vertikalmühlengetriebe von dem Planetenträger dargestellt wird. Die ineinander abwälzenden verzahnten Räder können sich infolge des sich einstellenden Kräftegleichgewichts und der erzielten Fertigungstoleranzen frei einstellen und verschieben und damit den Planetenträger radial zur zweiten Drehachse innerhalb eines kleinen und zulässigen Bereichs. Zusätzlich führen diese Verschiebungen der Planetenvorstufe zu einer Beeinflussung des Tragverhaltens der Kegelradstufe. Untersuchungen haben zudem gezeigt, dass die Verformungen aus den Kräften der Kegelradstufe sich mit Verformungen und Verschiebungen anderer Elemente des Vertikalmühlengetriebes überlagern, die aus den Prozesslasten resultieren.

Ein Problem besteht somit darin, dass die Prozesslasten aus dem Mahlvorgang, die Verschiebungen der einstellbeweglichen Glieder der Planetenstufen und die Verformung aus der Kegelradstufe das Tragverhalten der Verzahnung in der Planetenvorstufe und der Kegelradstufe negativ beeinflussen. Zudem ist die Kegelradstufe anfällig für durch die Prozesslasten verursachte Schwingungen und Stöße. In dem Triebstrang bauen sich somit interne Zusatzbeanspruchungen auf, die entweder zu Schäden führen oder eine Überdimensionierung erfordern

Ausgehend von diesem Stand der Technik ist es eine Aufgabe der vorliegenden Erfindung, ein Vertikalmühlengetriebe der eingangs genannten Art mit alternativem Aufbau zu schaffen. Zur Lösung dieser Aufgabe schafft die vorliegende Erfindung ein Vertikalmühlengetriebe der eingangs genannten Art, das dadurch gekennzeichnet ist, dass die Zwischenwelle als Hohlwelle ausgebildet ist, und dass in Zwischenwelle eine Torsionswelle winkeleinstellbeweglich mit dieser verbunden ist, wobei die Torsionswelle aufwärts aus der Zwischenwelle vorsteht, und wobei an dem vorstehenden Abschnitt der Torsionswelle das Sonnenrad befestigt ist. Bevorzugt ist die Torsionswelle mit dem Sonnenrad einstückig ausgeführt.

Im Gegensatz zum Stand der Technik ist das Kegelrad somit nicht auf einer üblicherweise als Vollwelle sondern auf einer als Hohlwelle ausgebildeten Zwischenwelle montiert, die in den Lagern biegesteif gelagert ist, und das Sonnenrad ist nicht mit der Zwischenwelle sondern an der in diese eingesetzte und drehfest mit dieser verbundene Torsionswelle angebracht. Die Vorteile des erfindungsgemäßen Vertikalmühlengetriebes führen damit dazu, dass die Verformungen und Verschiebungen aus den Prozesslasten und den Belastungen des Kegelrads voneinander entkoppelt werden. Darüber hinaus werden dank der drehweichen Torsionswelle auch Drehschwingungen aus dem Mahlprozess von der Kegelradstufe gedämpft, wodurch insgesamt eine lange Lebensdauer des erfindungsgemäßen Vertikalmühlengetriebes erzielt wird. Die Federsteifigkeit der Torsionswelle kann durch eine zweckmäßige Wahl der Parameter Länge, Durchmesser, Masse und Werkstoffeigenschaft so beeinflusst werden, dass sich die Eigenfrequenzen des Vertikalmühlengetriebes deutlich von den Erregerfrequenzen des Mahlprozesses unterscheiden. Auch verändert eine Bohrung durch die Torsionswelle entlang der Drehachse den Verformungswiderstand. Diese Bohrung lässt sich zudem zur Ölversorgung der obenliegenden Schmierstellen nutzen.

Gemäß einer Ausgestaltung der vorliegenden Erfindung ist die Zwischenwelle im unteren Bereich mit einem Radial-Axial-Lager und im oberen Bereich über zumindest ein Radiallager in dem Gehäuse gelagert. Auf diese Weise werden die Kräfte und Verformungen aus der Kegelradstufe im Gehäuse abgestützt und nicht in die Verzahnung der Vorstufe bzw. in die nachfolgenden Stufen des Triebstranges gelegt.

Der Abstand zwischen dem Radial-Axial-Lager und dem Radiallager kann möglichst klein ausgeführt sein, wobei die Zwischenwelle von diesen Lagern biegesteif abgeleitet ist. Dies führt zu einer biegesteifen Bauform der Zwischenwelle mit dem Vorteil einer geringeren Beeinträchtigung des Tragbilds der Kegelradstufe. In den Lagern der Zwischenwelle ist die Durchbiegung der Hohlwelle am geringsten und die verbliebende Auslenkung wird nur durch die geringe Lagerluft oder die Schmierspalthöhe bestimmt. Diese Stellen in der Hohlwelle eignen sich besonders zur Ankopplung der Torsionswelle.

Bevorzugt ist die Torsionswelle von oben in die Zwischenwelle eingesteckt und über eine formschlüssige Verbindung, insbesondere in Form einer balligen Kupplungs- oder Kurzverzahnung, mit der Zwischenwelle verbunden, wodurch ein einfacher Aufbau erzielt wird. Die Kupplungsverzahnung ist insbesondere im unteren Bereich der Torsionswelle und der Zwischenwelle vorgesehen, so dass die Torsionswelle nur in ihrem unteren Bereich an der Zwischenwelle fixiert ist. Entsprechend kann die Torsionswelle radiale Verschiebungen des Planetenträgers am oberen Ende der Welle durch elastische Biegung des langen schlanken Schaftes von der Zwischenwelle kompensieren. Da die Torsionswelle und die Zwischenwelle formschlüssig verbunden sind, drehen sie mit der gleichen Drehzahl. Dies ermöglicht eine einfache axiale Abstützung der Torsionswelle auf deren unterer Stirnseite auf dem gleich schnell drehenden Boden der Zwischenwelle.

Vorteilhaft ist die Zwischenwelle aus einem Gusswerkstoff hergestellt. Alternativ können Zwischenwelle und Kegelrad als einstückiges Schmiedeteil gestaltet sein.

Die Torsionswelle kann mit einer inneren Bohrung entlang der Drehachse versehen sein, um einerseits durch Änderung der Masse und des Widerstandsmoments die Steifigkeit anzupassen und andererseits durch die Drehachse Schmieröl zu obenliegenden Schmierstellen im Getriebe zu leiten. In die Bohrung führen stirnseitig sichtende Verbindungsstücke und stellen die Verbindung zur Ölversorgung her.

Gemäß einer Ausgestaltung der vorliegenden Erfindung kann eine vergrößerte Länge der Torsionswelle zu einer Verringerung des Kippwinkels des Sonnenrads bei einer Verschiebung der Planetenräder führen. Darüber hinaus kann als weiterer Vorteil des erfindungsgemäßen Vertikalmühlengetriebes die Änderung der Länge der Torsionswelle besonders einfach dazu benutzt werden, um die Bauhöhe des gesamten Vertikalmühlengetriebes individuell Kundenspezifikationen der Vertikalmühle anzupassen.

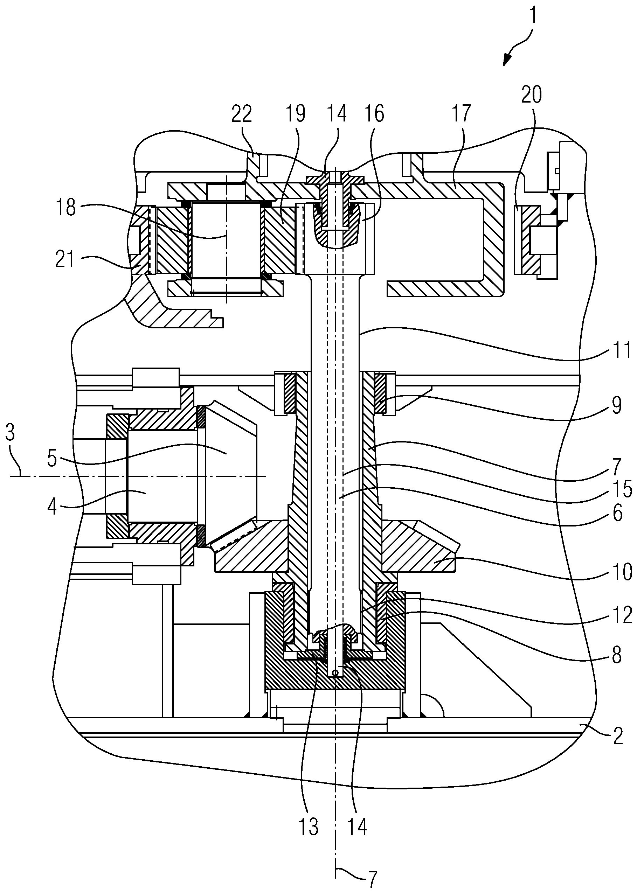

Weitere Merkmale und Vorteile der vorliegenden Erfindung werden anhand der nachfolgenden Beschreibung eines Vertikalmühlengetriebes gemäß einer Ausführungsform der vorliegenden Erfindung unter Bezugnahme auf die beiliegende Zeichnung deutlich, die eine schematische Teilschnittansicht des Vertikalmühlengetriebes zeigt.

Eine Vertikalmühle dient zur Zerkleinerung unterschiedlicher Materialien, wie beispielsweise Braun- und Steinkohle, Kalkstein, Mineralien, Zementmaterial oder dergleichen. Sie umfasst hierzu einen in der Zeichnung nicht dargestellten horizontalen Mahlteller, der über einen ebenfalls nicht dargestellten Motor und ein zwischen Motor und Mahlteller angeordnetes, in der Zeichnung nur ausschnittsweise dargestelltes Vertikalmühlengetriebe 1 drehend angetrieben wird. Die Zerkleinerung erfolgt in einer Mahlschüssel, in der Mahlwerkzeuge gegen den Mahlteller drücken.

Die Hauptaufgaben des Vertikalmühlengetriebes 1 bestehen in der Leistungsübertragung, der Übersetzung des erforderlichen Drehmomentes und der erforderlichen Drehzahl, der Lagerung der Mahlschüssel und der Aufnahme der Mahlkräfte. Es umfasst ein Gehäuse 2 und eine in diesem im Wesentlichen horizontal um eine erste Drehachse 3 drehbar gelagerte Antriebswelle 4, die im vorliegenden Fall auswärts aus dem Gehäuse 2 vorsteht und über einen nicht näher dargestellten angekuppelten Motor angetrieben wird. An dem innerhalb des Gehäuses 2 angeordneten freien Ende der Antriebswelle 4 ist ein Kegelritzel 5 vorgesehen, das drehfest mit der Antriebswelle 4 in der Art verbunden ist, dass die Antriebswelle 4 und das Kegelritzel 5 mittels einer bekannten Welle-Nabe-Verbindung gefügt sind, oder dass die Antriebswelle 4 mit dem Kegelritzel 5 als einstückige Kegelritzelwelle ausgeführt ist. Das Vertikalmühlengetriebe 1 umfasst ferner eine in dem Gehäuse 2 drehbar um eine im Wesentlichen vertikale zweite Drehachse 6 gelagerte Zwischenwelle 7, die sich im unteren Bereich über ein Radial-Axial-Lager 8 und im oberen Bereich über zumindest ein Radiallager 9 am Gehäuse 2 abstützt. Im unteren Bereich trägt die Zwischenwelle 7 drehfest ein Kegelrad 10, das mit dem Kegelritzel 5 in Eingriff steht und gemeinsam mit diesem eine Kegelradstufe bildet. Entsprechend ist die Zwischenwelle 7 über die Kegelradstufe drehend antreibbar. Erfindungsgemäß ist die Zwischenwelle 7 als Hohlwelle ausgebildet. Ferner ist in der Zwischenwelle 7 erfindungsgemäß eine vorliegend ebenfalls als hohlgebohrte Welle ausgebildete Torsionswelle 11 angeordnet und drehfest mit der Zwischenwelle 7 verbunden.

Die drehfeste Verbindung zwischen der Zwischenwelle 7 und der Torsionswelle 11 ist vorliegend über eine form- und/oder kraftschlüssige Kupplungsverzahnung 12 im unteren Bereich der Zwischenwelle 11 realisiert. Die Kupplungsverzahnung 12 ist mittig im Wirkpunkt des Radial-Axial-Lagers 8 angeordnet.

Die Torsionswelle 11 ist von oben mit radialem Spiel in die Zwischenwelle 7 eingesteckt, stützt sich am unteren freien Ende indirekt am Gehäuse 2 ab und steht aufwärts aus der Zwischenwelle 7 vor. Die Torsionswelle 11 steht am unteren Ende stirnseitig auf einer mit einer mittigen Bohrung versehenen Endscheibe 13 an der Zwischenwelle 7. In die mittige Bohrung sind dichtende Verbindungsstücke 14eingesetzt, über die vom stillstehenden Gehäuse 2 nicht dargestelltes Schmieröl in die Bohrung 15 der Torsionswelle 11 und von dort aus in den obenliegenden Schmierstellen im Vertikalmühlengetriebe 1 geleitet werden kann. An dem aus der Zwischenwelle 7 vorstehenden Abschnitt der Torsionswelle 11 ist ein Sonnenrad 16 des Vertikalmühlengetriebes 1 befestigt. Dargestellt ist ein einstückiges Bauteil. An einem in dem Gehäuse 2 drehbar um die zweite Drehachse 6 gelagerten Planetenradträger 17 ist zumindest ein um eine zugeordnete Planetenraddrehachse 18 drehbares Planetenrad 19 gehalten, das einerseits mit dem Sonnenrad 16 und andererseits mit einer Innenverzahnung 20 eines ortsfest an dem Gehäuse 2 gehaltenen Hohlrads 21 kämmt. Bevorzugt sind in bekannter Weise mehrere Planetenräder 19 an dem Planetenradträger 17 gehalten, wodurch sich die Antriebsleistung in bekannter Weise auf die deshalb relativ kleinbauenden Planetenräder 19 verzweigt. An der Oberseite des Planetenradträgers 17 ist in bekannter Weise eine vorliegend nicht näher dargestellte zweite Planetenstufe angeordnet, die über eine weitere Abtriebskupplung 22 mit dem nicht dargestellten Sonnenrad der zweiten Planetenstufe drehfest verbunden ist, und dann mittelbar an der Antriebsseite mit dem Mahlteller drehfest verbunden ist.

Während des Betriebs wird die Antriebswelle 4 über einen Motor drehend angetrieben. Die Drehbewegung der Antriebswelle 4 wird über die Kegelstufe (5, 10) mit einem vorbestimmten Übersetzungsverhältnis auf die Zwischenwelle 7 übertragen.

Mit der Zwischenwelle 7 dreht sich die drehfest in diese eingesetzte Torsionswelle 11 mit der gleichen Drehzahl und damit das Sonnenrad 16. Das Sonnenrad 16 dreht wiederum den Planetenradträger 17 über die mit dem Sonnenrad 16 und dem Hohlrad 21 kämmenden Planetenräder 19 und wandelt in dieser Getriebestufe wiederum Drehzahl und Drehmoment. Entsprechend wird die zweite Planetenstufe mit dem Mahlteller drehend über den Planetenradträger 17 über die Antriebskupplung 22 angetrieben.

Ein wesentlicher Vorteil des Aufbaus des erfindungsgemäßen Vertikalmühlengetriebes 1 besteht darin, dass das an der Torsionswelle 11 befestigte Sonnenrad 16 der radialen Verschiebung des Planetenradträgers 17 aus den Prozesslasten unabhängig folgen kann, ohne die Kegelradstufe negativ zu beeinflussen. In umgekehrter Richtung können die Belastungen aus der Kegelradstufe zu einer elastischen Verformung der Zwischenwelle 7 führen, ohne die Planetenstufe negativ zu beeinflussen. Bewerkstelligt wird die Entkopplung der Verformungen und Verschiebungen aus den Prozesslasten und den Belastungen des Kegelrads 10 dank der innerhalb der das Kegelrad 10 aufnehmenden Zwischenwelle 7 angeordneten, das Sonnenrad 16 aufnehmenden Torsionswelle 11. Zu dieser Entkopplung trägt auch die mittige Anordnung der Kupplungsverzahnung 12 im Wirkpunkt des Radial-Axial-Lagers 8 bei. Darüber hinaus werden dank der zweckmäßig ausgelegten Federsteifigkeit der Torsionswelle 11 auch die Eigenfrequenzen des Triebstrangs in einen unkritischen nicht resonanzgefährdeten Bereich verlegt und so von der Schwingungserregung aus dem Mahlprozess entkoppelt, wodurch insgesamt eine lange Lebensdauer des erfindungsgemäßen Vertikalmühlengetriebes 2 erzielt wird. Die individuell bestimmbaren Längen der Torsionswelle 11 führen zusätzlich zu einer sehr drehweichen Welle ähnlich einer Drehfeder, die Stöße aus dem Mahlprozess dämpft, so dass diese nur geringfügig auf die Kegelradstufe einwirken können.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Vertikalmühlengetriebe (1) mit einem Gehäuse (2), einer in dem Gehäuse (2) um eine horizontale erste Drehachse (3) drehbar gelagerte Antriebswelle (4), die an einem ihrer Enden mit einem Kegelritzel (5) versehen ist, einer in dem Gehäuse (2) drehbar um eine vertikale zweite Drehachse (6) gelagerte Zwischenwelle (7), die im unteren Bereich mit einem mit dem Kegelritzel (5) im Eingriff stehenden Kegelrad (10) versehen ist, einem über die Zwischenwelle (7) drehend angetriebenen Sonnenrad (16) und einem in dem Gehäuse (2) drehbar um die zweite Drehachse (6) gelagerten ersten Planetenradträger (17), an dem drehbar um eine zugeordnete Planetenraddrehachse (18) zumindest ein Planetenrad (19) gehalten ist, das einerseits mit dem Sonnenrad (16) und andererseits mit einer Innenverzahnung (20) eines ortsfest an dem Gehäuse (2) gehaltenen Hohlrads (21) im Eingriff ist, **dadurch gekennzeichnet, dass** die Zwischenwelle (7) als Hohlwelle ausgebildet ist, und dass in die Zwischenwelle (7) eine Torsionswelle (11) eingesteckt, drehfest und winkeleinstellbeweglich mit dieser verbunden ist, wobei die Torsionswelle (11) aufwärts aus der Zwischenwelle (7) vorsteht, und wobei an dem vorstehenden Abschnitt der Torsionswelle (11) das Sonnenrad (16) befestigt ist.

2. Vertikalmühlengetriebe (1) nach Anspruch 1, **dadurch gekennzeichnet, dass** die Zwischenwelle (7) im unteren Bereich mit einem Radial-Axial-Lager (8) und im oberen Bereich über zumindest ein Radiallager (9) in dem Gehäuse (2) gelagert ist.

3. Vertikalmühlengetriebe (1) nach einem der vorhergehenden Ansprüche, **dadurch gekennzeichnet, dass** die Torsionswelle (11) von oben in die Zwischenwelle (7) eingesteckt und über eine formschlüssige Verbindung, insbesondere in Form einer Kupplungsverzahnung (12) mit der Zwischenwelle (7) verbunden, wobei die Kupplungsverzahnung (12) insbesondere im unteren Bereich der Torsionswelle (11) und der Zwischenwelle (7) vorgesehen ist.

4. Vertikalmühlengetriebe (1) nach Anspruch 3, **dadurch gekennzeichnet, dass** die Kupplungsverzahnung (12) als form- oder kraftschlüssige Verbindung mittels einer balligen Kupplungs- oder Kurzverzahnung hergestellt ist.

5. Vertikalmühlengetriebe (1) nach einem der Ansprüche 3 oder 4, **dadurch gekennzeichnet, dass** die Kupplungsverzahnung (12) in der Zwischenwelle (7) an einem Punkt geringer Durchbiegung liegt und dass das Radial-Axial-Lager (8) außen auf der Zwischenwelle (7) die innenliegende Kupplungsverzahnung (12) umschließt.

6. Vertikalmühlengetriebe (1) nach einem der vorhergehenden Ansprüche, **dadurch gekennzeichnet, dass** die Bohrung (15) in der Torsionswelle (11) zur Durchleitung von Schmieröl zu obenliegenden Schmierstellen im Vertikalmühlengetriebe (1) dient und dass in die Bohrung (15) stirnseitig eingebrachte dichtende Verbindungsstücke (14) den Anschluss an ein Ölleitungssystem herstellen.

7. Vertikalmühlengetriebe (1) nach einem der vorhergehenden Ansprüche, **dadurch gekennzeichnet, dass** die Torsionswelle (11) und das daran befestigte Sonnenrad (16) einstückig ausgeführt sind.

8. Vertikalmühlengetriebe (1) nach einem der vorhergehenden Ansprüche, **dadurch gekennzeichnet, dass** sich die Torsionswelle (11) axial stirnseitig unten auf der Endscheibe (13) der Zwischenwelle (7) abstützt.

9. Vertikalmühlengetriebe (1) nach einem der vorhergehenden Ansprüche, **dadurch gekennzeichnet, dass** die Zwischenwelle (7) aus einem Gusswerkstoff oder als einstückiges Schmiedeteil hergestellt ist.

## Claims

1. Vertical mill gear unit (1) with a housing (2), a drive shaft (4) which is mounted in the housing (2) such that it can be rotated about a horizontal first rotational axis (3) and is provided with a bevel pinion (5) at one of its ends, an intermediate shaft (7) which is mounted in the housing (2) such that it can be rotated about a vertical second rotational axis (6) and is provided in the lower region with a bevel gear (10) which is in engagement with the bevel pinion (5), a sun gear (16) which is driven rotationally via the intermediate shaft (7), and a first planetary gear carrier (17) which is mounted in the housing (2) such that it can be rotated about the second rotational axis (6) and on which at least one planetary gear (19) is held such that it can be rotated about an associated planetary gear rotational axis (18), which planetary gear (19) is in engagement firstly with the sun gear (16) and secondly with an internal toothing system (20) of an internal gear (21) which is held on the housing (2) in a stationary manner, **characterized in that** the intermediate shaft (7) is configured as a hollow shaft, and **in that** a torsion shaft (11) is plugged into the intermediate shaft (7), is connected to the said intermediate shaft (7) fixedly so as to rotate with it and such that it can be moved so as to set the angle, the torsion shaft (11) projecting upwards from the intermediate shaft (7), and the sun gear (16) being fastened to the projecting section of the torsion shaft (11).

2. Vertical mill gear unit (1) according to Claim 1, **characterized in that** the intermediate shaft (7) is mounted in the housing (2) in the lower region by way of a radial/axial bearing (8) and in the upper region via at least one radial bearing (9).

3. Vertical mill gear unit (1) according to either of the preceding claims, **characterized in that** the torsion shaft (11) is plugged from above into the intermediate shaft (7) and is connected to the intermediate shaft (7) via a positively locking connection, in particular in the form of a coupling spline system (12), the coupling spline system (12) being provided, in particular, in the lower region of the torsion shaft (11) and the intermediate shaft (7).

4. Vertical mill gear unit (1) according to Claim 3, **characterized in that** the coupling spline system (12) is produced as a positively locking or non-positive connection by means of a crowned coupling spline system or stub spline system.

5. Vertical mill gear unit (1) according to either of Claims 3 and 4, **characterized in that** the coupling spline system (12) in the intermediate shaft (7) lies at a point of low deflection, and **in that** the radial/axial bearing (8) encloses the inner coupling spline system (12) on the outside on the intermediate shaft (7).

6. Vertical mill gear unit (1) according to one of the preceding claims, **characterized in that** the bore (15) in the torsion shaft (11) serves to conduct lubricating oil through to upper lubricating points in the vertical mill gear unit (1), and **in that** sealing connecting pieces (14) which are introduced into the bore (15) on the end side establish the connection to an oil line system.

7. Vertical mill gear unit (1) according to one of the preceding claims, **characterized in that** the torsion shaft (11) and the sun gear (16) which is fastened to it are configured in one piece.

8. Vertical mill gear unit (1) according to one of the preceding claims, **characterized in that** the torsion shaft (11) is supported axially on the end side at the bottom on the end plate (13) of the intermediate shaft (7).

9. Vertical mill gear unit (1) according to one of the preceding claims, **characterized in that** the intermediate shaft (7) is produced from a cast material or as a single-piece forged part.

## Revendications

1. Transmission (1) de broyeur vertical, comprenant un carter (2), un arbre (4) menant, monté tournant autour d'un premier axe (3) horizontal de rotation dans le carter (2) et pourvu, à l'un de ses bouts, d'un pignon (5) conique, un arbre (7) intermédiaire, monté tournant autour d'un deuxième axe (6) vertical de rotation dans le carter (2) et pourvu, dans la partie inférieure, d'une roue (10) conique engrenant avec le pignon (5) conique, un premier support (17) de roue satellite, monté tournant autour du deuxième axe (6) de rotation dans le carter (2) et auquel est retenu, tournant autour d'un axe (18) de rotation de roue satellite associé, au moins une roue (9) satellite, qui engrène d'une part avec la roue (16) solaire et d'autre part avec une denture (20) intérieure d'une roue (21) à denture intérieure, retenue à poste fixe sur le carter (2), **caractérisée en ce que** l'arbre (7) intermédiaire est constitué sous la forme d'un arbre creux et **en ce que**, dans l'arbre intermédiaire, est enfilé un arbre (11) de torsion, en en étant solidaire en rotation et réglable angulairement, l'arbre (11) de torsion étant en saillie vers l'avant de l'arbre (7) intermédiaire, et dans lequel la roue (16) solaire est fixée au tronçon en saillie de l'arbre (11) de torsion.

2. Transmission (1) de broyeur vertical suivant la revendication 1, **caractérisée en ce que** l'arbre (7) intermédiaire est monté dans le carter (2), dans la partie inférieure, par un palier (8) radial-axial, et dans la partie supérieure, par au moins un palier (9) radial.

3. Transmission (1) de broyeur vertical suivant l'une des revendications précédentes, **caractérisée en ce que** l'arbre (11) de torsion est enfilé par le haut dans l'arbre (7) intermédiaire et est relié à l'arbre (7) intermédiaire par une liaison à complémentarité de forme, notamment sous la forme d'une denture (12) d'accouplement, la denture (12) d'accouplement étant prévue notamment dans la partie inférieure de l'arbre (11) de torsion et de l'arbre (7) intermédiaire.

4. Transmission (1) de broyeur vertical suivant la revendication 3, **caractérisée en ce que** la denture (12) d'accouplement est ménagée sous la forme d'une liaison à complémentarité de forme ou à coopération de force, au moyen d'une denture d'accouplement ou courte convexe.

5. Transmission (1) de broyeur vertical suivant l'une des revendications 3 ou 4, **caractérisée en ce que** la denture (12) d'accouplement se trouve dans l'arbre (7) intermédiaire, en un point de fléchissement petit et **en ce que** le palier (8) radial-axial entoure, à l'extérieur sur l'arbre (7) intermédiaire, la denture (12) d'accouplement se trouvant à l'intérieur.

6. Transmission (1) de broyeur vertical suivant l'une des revendications précédentes, **caractérisée en ce que** le trou (15) dans l'arbre (11) de torsion sert au passage d'huile de lubrification vers des points à lubrifier se trouvant en haut dans la transmission (1) de broyeur vertical et **en ce que**, dans le trou (15), des pièces (14) de liaison d'étanchéité, introduites du côté frontal, donnent le raccordement à un système de conduite d'huile.

7. Transmission (1) de broyeur vertical suivant l'une des revendications précédentes, **caractérisée en ce que** l'arbre (11) de torsion et la roue (16) solaire, qui y est fixée, sont réalisés d'une seule pièce.

8. Transmission (1) de broyeur vertical suivant l'une des revendications précédentes, **caractérisée en ce que** l'arbre (11) de torsion s'appuie axialement du côté frontal, en bas, sur le flasque (13) de bout de l'arbre (7) intermédiaire.

9. Transmission (1) de broyeur vertical suivant l'une des revendications précédentes, **caractérisée en ce que** l'arbre (7) intermédiaire est en un matériau coulé ou sous la forme d'une pièce forgée d'un seul tenant.
